(19) Europäisches Patentamt
European Patent Office
Office européen des brevets

(11) **EP 1 953 208 A1**

(12) **EUROPEAN PATENT APPLICATION**
published in accordance with Art. 158(3) EPC

(43) Date of publication:
**06.08.2008 Bulletin 2008/32**

(51) Int Cl.:
*C10G 65/10* [(2006.01)]     *B01J 29/12* [(2006.01)]
*C10G 47/18* [(2006.01)]     *C10G 47/20* [(2006.01)]

(21) Application number: **07706962.3**

(22) Date of filing: **18.01.2007**

(86) International application number:
**PCT/JP2007/050658**

(87) International publication number:
**WO 2007/086299 (02.08.2007 Gazette 2007/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.01.2006 JP 2006021291**

(71) Applicant: **Nippon Oil Corporation Tokyo 105-8412 (JP)**

(72) Inventors:
• **SEKI, Hiroyuki Kanagawa 231-0815 (JP)**

• **HIGASHI, Masahiro Kanagawa 231-0815 (JP)**
• **HATAYAMA, Minoru Kanagawa 231-0815 (JP)**

(74) Representative: **Grünecker, Kinkeldey, Stockmair & Schwanhäusser Anwaltssozietät Leopoldstrasse 4 80802 München (DE)**

(54) **METHOD OF HYDROGENOLYSIS OF WAX AND PROCESS FOR PRODUCING FUEL BASE**

(57)     The hydrocracking method of wax of the invention is a hydrocracking process wherein crude wax is subjected to hydrocracking and the untreated wax fraction that is produced after the hydrocracking is re-supplied for hydrocracking, and wherein hydrocracking of the mixture of the crude wax and untreated wax fraction is carried out in such a manner for a conversion ratio of 50-85 % by mass from the wax fraction with a boiling point of 360°C or above to the light fraction with a boiling point of below 360°C in the presence of a hydrocracking catalyst. It is thereby possible to simultaneously achieve both an increased heart-cut fraction yield (as the product of the hydrocracking) and a reduced normal paraffin content in the heart-cut fraction when the untreated wax is hydrocracked by a bottom recycling system.

**Fig.1**

## Description

## Technical Field

The present invention relates to a hydrocracking method of wax and to a production method of a fuel base material.

## Background Art

The stricter environmental standards for liquid fuels such as gasoline and light oil that have been rapidly adopted in recent years have led to rising hopes for clean, environmentally-friendly liquid fuels with reduced sulfur or aromatic hydrocarbon contents. One production process for such clean fuels is Fischer-Tropsch (FT) synthesis which uses as starting materials hydrogen and carbon monoxide obtained from gasification of asphalt or coal, or refining of natural gas. FT synthesis allows production of liquid fuel bases rich in paraffins and containing no sulfur, while simultaneously allowing production of waxes (FT waxes) as well. FT waxes can also be converted to heart-cut fractions (fuel bases such as kerosene and light oil) by hydrocracking.

Techniques for producing fuel bases by hydrocracking of waxes are also being investigated. For example, Patent documents 1-3 disclose hydrocracking processes using FT waxes as starting materials.

[Patent document 1] International Patent Publication No. 2004/028688
[Patent document 2] Japanese Unexamined Patent Publication No. 2004-255241
[Patent document 3] Japanese Unexamined Patent Publication No. 2004-255242

## Disclosure of the Invention

## Problems to be Solved by the Invention

Hydrocracking of wax usually leaves an untreated wax fraction. In order to increase the maximum yield for the heart-cut fraction, it is preferred to supply the untreated wax fraction for additional hydrocracking. The reuse of an untreated wax fraction as the starting material for hydrocracking will henceforth be referred to as "bottom recycling", for convenience.

When a heart-cut fraction produced from hydrocracking of wax is used as a fuel base, the normal paraffin content is preferably low while the isoparaffin content is preferably high. In the case of automobile gasoline, for example, a high normal paraffin content results in an insufficient octane number. In the case of light oil, a high normal paraffin content impairs the low-temperature flow properties, often restricting its use as a commercial product.

However, little research has been carried out on processes for high-yield production of isoparaffin-rich heart-cut fractions, in the course of hydrocracking of untreated wax by a bottom recycling system in the conventional hydrocracking method of wax described above.

Production of heart-cut fractions in the field of petroleum refining is typically accomplished by hydrocracking of reduced pressure light oil, whereby it is possible to produce low-sulfur light oil which, however, contains aromatic compounds. Recycling methods for uncracked reduced pressure light oil (bottom residue) with a fixed crack-per-pass have already been established, and many types of industrial equipment for implementing them are in actual operation.

On the other hand, virtually no data can be found for bottom recycling in hydrocracking where the major component is normal paraffin, such as with FT wax as explained above, and bottom recycling of untreated wax has not been described. This is thought to be due to the fact that the reactive properties of untreated wax fractions differ significantly from those of raw material wax.

For example, in order to increase the heart-cut fraction yield it is preferred to prevent lightening of the produced heart-cut fraction by carrying out hydrocracking under mild reaction conditions, but the normal paraffin content of heart-cut fractions obtained under such reaction conditions tends to be higher. On the other hand, the normal paraffin content of the obtained heart-cut fraction can be reduced by employing more severe reaction conditions for hydrocracking, although this tends to promote overcracking of the produced heart-cut fraction and result in a reduced heart-cut fraction yield. Thus, considering a trade-off between increasing the heart-cut fraction yield and reducing the normal paraffin content, and in light of the fact that the carbon number distribution and molecular structure of untreated wax differs from that of crude wax, it is necessary to select the optimal reaction conditions for bottom recycling and efficient production of a heart-cut fraction with low normal paraffin.

It is an object of the present invention, which has been accomplished in light of these circumstances, to provide a hydrocracking method of wax which can achieve both an increased heart-cut fraction yield (as the target product of the hydrocracking) and reduced normal paraffin content in the heart-cut fraction during hydrocracking of untreated wax by a bottom recycling system, as well as a production method of a fuel base material.

**Means for Solving the Problems**

A result of much diligent research directed toward achieving the object stated above, the present inventors discovered that the aforementioned problems can be solved by carrying out hydrocracking in such a manner that the hydrocracking conversion ratio satisfies specific conditions during bottom recycling of untreated wax in the process of wax hydrocracking, and the invention has been completed upon this discovery.

Specifically, the hydrocracking method of wax of the invention is a hydrocracking process wherein crude wax is subjected to hydrocracking and the untreated wax fraction that is produced after the hydrocracking is re-supplied for hydrocracking, and wherein hydrocracking of the crude wax and untreated wax fraction is carried out in the presence of a hydrocracking catalyst in such a manner that the conversion ratio is 50-85 % by mass from the wax fraction with a boiling point of 360°C or above to the light fraction with a boiling point of below 360°C.

The production method of a fuel base material according to the invention comprises a hydrocracking step wherein crude wax is subjected to hydrocracking and the untreated wax fraction that is produced after the hydrocracking is re-supplied for hydrocracking, in which hydrocracking step hydrocracking of the crude wax and untreated wax fraction is carried out in the presence of a hydrocracking catalyst in such a manner that the conversion ratio is 50-85 % by mass from the wax fraction with a boiling point of 360°C or above to the light fraction with a boiling point of below 360°C.

The conversion ratio from the wax fraction with a boiling point of 360°C or above to the light fraction with a boiling point of below 360°C is the conversion ratio as defined by formula (1) below. In formula (1), "weight of wax fraction with boiling point of 360°C and above" means the total weight of wax fractions with boiling points of 360°C and above in the crude wax and untreated wax fraction, while "weight of fraction with boiling point of below 360°C" means the weight of the fraction with a boiling point of below 360°C in the treated product obtained by the hydrocracking.

[Formula 1]

$$\text{Conversion ratio (\% by mass)} = \frac{\text{(weight of fraction with boiling point of below 360°C)}}{\text{(weight of wax fraction with boiling point of 360°C and above)}} \quad (1)$$

According to the invention, the hydrocracking catalyst preferably contains USY-zeolite and at least one solid acid selected from among silica-alumina, alumina-boria and silica-zirconia.

The mean particle size of the USY-zeolite is preferably no greater than 1.0 $\mu$m.

The USY-zeolite content is also preferably no greater than 6 % by mass based on the total weight of the hydrocracking catalyst.

The reaction temperature for the crude wax and untreated wax fraction during the hydrocracking is preferably no greater than 370°C.

**Effect of the Invention**

As mentioned above, the hydrocracking method of wax and fuel base manufacturing process of the invention can achieve both an increased heart-cut fraction yield (as the target product of the hydrocracking) and a reduced normal paraffin content in the heart-cut fraction, during bottom recycling of the untreated wax.

**Brief Explanation of the Drawings**

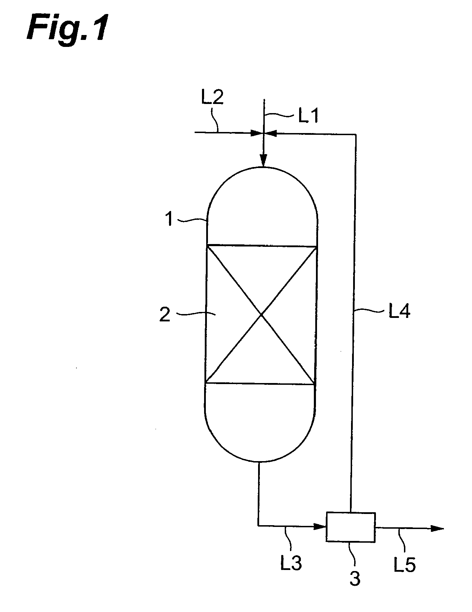

Fig. 1 is an illustration showing an example of a fixed bed reactor used for the invention.

**Explanation of Symbols**

1: Reaction column, 2: hydrocracking catalyst layer, 3: distilling apparatus.

**Best Mode for Carrying Out the Invention**

Preferred modes of the invention will now be described in detail.

Fig. 1 is an illustration showing an example of a fixed bed reactor suitable for use according to the invention.

In the fixed bed reactor shown in Fig. 1, a hydrocracking catalyst layer 2 is provided in a reaction column 1. At the top of the reaction column 1 there is connected a line L1 for supply of hydrogen into the reaction column 1, while a line L2 for supply of the crude wax is connected upstream from the connection of the line L1 with the reaction column 1. Also, at the bottom of the reaction column 1 there is connected a line L3 for removal of the hydrocracked decomposition product oil from the reaction column 1, while the other end of the line L3 is connected to the distilling apparatus 3. The distilling apparatus 3 is capable of fractionating the light fraction with a boiling point of below 360°C produced by the hydrocracking, from the unreacted wax fraction with a boiling point of 360°C and above, and the fractionated unreacted wax fraction is transported to a line L4 while the light fraction is transported to a line L5. The end of the line L4 is connected upstream from the connection of the line L1 with the reaction column 1, while the unreacted wax fraction is introduced into the reaction column 1 from the top of the reaction column 1 and re-supplied for hydrocracking (bottom recycling).

The crude wax used is preferably a petroleum-based or synthetic wax comprising at least 70 % by mass of C16 or greater and preferably C20 or greater normal paraffins. As examples of such waxes there may be mentioned petroleum-based waxes such as slack wax and microwax, or synthetic waxes such as "FT wax" produced by FT synthesis.

There are no particular restrictions on the hydrocracking catalyst in the hydrocracking catalyst layer 2, but the hydrocracking catalyst is preferably one comprising one or more selected from among USY-zeolite, silica-alumina, silica-zirconia, alumina-boria and silicoaluminophosphates (SAPO-11 or the like) as the carrier, more preferably one comprising USY-zeolite and one or more amorphous solid acids selected from among silica-alumina, alumina-boria and silica-zirconia, and most preferably one comprising USY-zeolite and alumina-boria.

When the hydrocracking catalyst contains USY-zeolite, the mean particle size is preferably no greater than 1.0 $\mu$m and even more preferably no greater than 0.5 $\mu$m. If the mean particle size of the USY-zeolite exceeds 1.0 $\mu$m, the heart-cut fraction (the target product of the hydrocracking) will be lighter and its yield will tend to be reduced.

The molar ratio of silica/alumina in the USY-zeolite is preferably 25-80 and more preferably 28-50. A silica/alumina molar ratio of less than 25 will tend to lower the selectivity of the heart-cut fraction. On the other hand, while a silica/alumina molar ratio of greater than 80 will not impair the selectivity of the heart-cut fraction, the reaction temperature must be increased due to the lower catalytic activity, and therefore the catalyst life tends to be shorter.

The USY-zeolite content is preferably no greater than 6 % by mass, more preferably no greater than 4 % by mass and even more preferably no greater than 3 % by mass based on the total weight of the hydrocracking catalyst. A USY-zeolite content of greater than 6 % by mass will tend to lower the selectivity of the heart-cut fraction.

The hydrocracking catalyst may further contain a binder for molding of the carrier. There are no particular restrictions on the binder, but preferred binders include alumina and silica, with alumina being especially preferred. The shape of the carrier is also not particularly restricted, and it may be in a form of particles, cylinders (pellets) or the like.

The hydrocracking catalyst preferably comprises a metal belonging to Group VIII of the Periodic Table supported on the aforementioned carrier. The supported metal is preferably nickel, rhodium, palladium, iridium or platinum, with palladium and platinum being preferred. Such metals may be supported alone or in combinations of two or more.

When the hydrocracking catalyst of the hydrocracking catalyst layer 3 contains such a metal, the metal is preferably reduced in a reducing gas atmosphere such as hydrogen prior to hydrocracking. The reducing conditions are not particularly restricted, but preferably the reducing temperature is 300-360°C and the reducing time is 1-6 hours.

When wax hydrocracking is carried out using a fixed bed reactor such as shown in Fig. 1, first the crude wax is used alone for hydrocracking. During this first hydrocracking, the reaction conditions are preferably selected so that the conversion ratio as defined by formula (1) above is 50-85 % by mass, with the hydrocracking preferably being conducted for a prescribed time to stabilize the catalytic activity of the hydrocracking catalyst layer 2.

The cracked oil produced by hydrocracking using the crude wax alone is transported from the reaction column 1 to the distilling apparatus 3, for fractionation of the untreated wax fraction with a boiling point of 360°C and above and the light fraction with a boiling point of below 360°C. The untreated wax fraction with a boiling point of 360°C and above is then introduced through the top of the reaction column 1 together with the crude wax, for hydrocracking of the mixture of the crude wax and untreated wax fraction.

In order to simultaneously achieve an increased yield of heart-cut fraction as the target product of the hydrocracking and a reduced normal paraffin content in the heart-cut fraction, the hydrocracking must be conducted in such a manner that the conversion ratio as defined by formula (1) above is 50-85 % by mass and more preferably 60-78 % by mass. If the conversion ratio is less than 50 % by mass, isomerization of normal paraffins to isoparaffins will not proceed sufficiently, such that the normal paraffin content of the obtained heart-cut fraction will not be adequately reduced. If the conversion ratio exceeds 85 % by mass, the heart-cut fraction yield will be reduced as a result of overcracking.

The mixing ratio of the crude wax and untreated wax fraction is not particularly restricted so long as the conversion ratio as defined by formula (1) above is 50-85 % by mass, but the untreated wax fraction content is preferably 10-60 % by mass and more preferably 15-50 % by mass based on the total of the crude wax and untreated wax fraction.

The reaction conditions for hydrocracking of the mixture of the crude wax and untreated wax fraction are also not particularly restricted so long as the conversion ratio as defined by formula (1) above is 50-85 % by mass, but preferably the reaction temperature is not above 370°C. A reaction temperature exceeding 370°C is not preferred for a clean fuel base because aromatic compounds will tend to be produced. The reaction pressure is also not particularly restricted, but the hydrogen partial pressure is preferably 1-12 MPa and more preferably 2-6 MPa. In addition, the liquid space velocity of the mixture of the crude wax and the unreacted wax fraction is not particularly restricted but is preferably 0.2-5.0 h$^{-1}$ and more preferably 0.5-3.0 h$^{-1}$. A liquid space velocity of smaller than 0.2 h$^{-1}$ will lead to problems such as requirement for an excessively large reaction column, reduced selectivity of the heart-cut fraction and inadequate isomerization. A liquid space velocity of greater than 5.0 h$^{-1}$ will require a higher reaction temperature because of low activity, and the catalyst life will thus be shortened. The hydrogen/oil ratio is not particularly restricted but is preferably 200-850 NL/L and more preferably 350-650 NL/L.

The mode of the invention explained here accomplishes hydrocracking of a mixture of crude wax and untreated wax in such a manner that the conversion ratio as defined by formula (1) above is 50-85 % by mass, thereby making it possible to simultaneously achieve an increased heart-cut fraction yield (as the target product of the hydrocracking) and a reduced normal paraffin content in the heart-cut fraction.

The invention is not limited to this mode, however. For example, although the untreated wax fraction and crude wax are introduced as a mixture into the reaction column 1 according to this mode, the untreated wax fraction and crude wax may instead be introduced separately into the reaction column 1.

Also, while the position at which the untreated wax fraction is introduced into the reaction column 1 is at the top of the reaction column 1 (the position where the line L4 is connected to the reaction column 1) according to this mode, the untreated wax fraction may instead be introduced from the side of the reaction column 1. When the unreacted wax fraction is introduced from the side of the reaction column 1, the position where the line L4 is connected to the reaction column 1 is preferably upstream from the upstream end of the hydrocracking catalyst layer 2.

Finally, although the hydrocracking catalyst layer 2 has a single-layer structure according to this mode, different hydrocracking catalyst layers may be laminated to form a multilayer structure instead.

**Examples**

The present invention will now be explained in greater detail based on examples and comparative examples, with the understanding that these examples are in no way limitative on the invention.

(Example 1)

A carrier composed of cylinders of size φ1.5 mm and length approximately 3 mm were formed using USY-zeolite with a mean particle size of 0.82 μm (silica/alumina molar ratio: 37), alumina-boria (alumina/boria weight ratio: 5.6) and an alumina binder (USY-zeolite/alumina-boria/alumina binder = 4/56/40 (weight ratio)). A platinic chloride aqueous solution was impregnated into the carrier, for loading of platinum to 0.6 % by mass with respect to the carrier. This was dried and fired to obtain a hydrocracking catalyst.

Next, 300 ml of the obtained hydrogenation catalyst was packed into the reaction column 1 of a fixed bed reactor such as shown in Fig. 1 to form a hydrocracking catalyst layer 2, and the reactor was used for the bottom recycling experiment described below.

First, the hydrocracking catalyst was subjected to reduction treatment at 345°C for 4 hours under a hydrogen stream, and then the crude wax alone was subjected to hydrocracking. FT wax (C21-80, normal paraffin content: 95 % by mass) was used as the crude wax. As the hydrocracking reaction conditions, the liquid space velocity of the crude wax was 2.0 h$^{-1}$ (crude wax liquid flow rate: 600 ml/h) with respect to the total amount of hydrocracking catalyst, the hydrogen partial pressure was 3 MPa and the hydrogen/oil ratio was 570 NL/L, while the reaction temperature was set for a conversion ratio of 55 % by mass as defined by formula (1). The reaction temperature was set to 292°C.

Upon confirming stabilization of catalytic activity after the start of hydrocracking of the crude wax, a conversion ratio of 55 % by mass as defined by formula (1) above was maintained for 50 days. The treated oil obtained during this period was distilled with a distilling apparatus 3 (precision distilling apparatus), for separation of the light fraction with a boiling point of below 360°C and the untreated wax with a boiling point of 360°C and above.

Next, the untreated wax fraction with a boiling point of 360°C and above was transported to the line L4, the untreated wax fraction and crude wax were combined to an untreated wax content of 45 % by mass based on the total weight of the untreated wax fraction and crude wax, and this mixture was used as the starting material for hydrocracking. The reaction temperature, set for a conversion ratio of 55 % by mass as defined by formula (1) above, was 290°C. The other reaction conditions were the same as for hydrocracking of FT wax alone.

After 30 minutes of the bottom recycling experiment, the treated product oil was analyzed by gas chromatography to determine the proportion of the heart-cut fraction with a boiling point of between 145°C and 360°C in the light fraction with a boiling point of below 360°C (hereinafter referred to as "heart-cut fraction selectivity"), and the normal paraffin and aromatic compound contents in the heart-cut fraction. The results are shown in Table 1.

(Example 2)

A bottom recycling experiment was conducted in the same manner as Example 1, except that the conversion ratio represented by formula (1) above was 75 % by mass for the hydrocracking of crude wax alone, the conversion ratio represented by general formula (1) for hydrocracking of the crude wax and untreated wax fraction was 75 % by mass, and the untreated wax content of the mixture was 25 % by mass. The reaction temperature for hydrocracking of the mixture of the crude wax and untreated wax fraction was 299°C. The heart-cut fraction selectivity obtained by chromatographic analysis of the treated product oil and the normal paraffin and aromatic compound contents of the heart-cut fraction are listed in Table 1.

(Example 3)

A hydrocracking catalyst was prepared in the same manner as Example 1, except that USY-zeolite with a mean particle size of 0.42 μm (silica/alumina molar ratio: 37) was used instead of the USY-zeolite with a mean particle size of 0.82 μm. A bottom recycling experiment was then conducted in the same manner as Example 1, except for using this hydrocracking catalyst. The reaction temperature for hydrocracking of the crude wax and untreated wax fraction was 296°C. The heart-cut fraction selectivity obtained by chromatographic analysis of the treated product oil and the normal paraffin and aromatic compound contents of the heart-cut fraction are listed in Table 1.

(Example 4)

A hydrocracking catalyst was prepared in the same manner as Example 1, except that the USY-zeolite content was changed from 4 % by mass to 2 % by mass. A bottom recycling experiment was then conducted in the same manner as Example 1, except for using this hydrocracking catalyst. The reaction temperature for hydrocracking of the crude wax and untreated wax fraction was 318°C. The heart-cut fraction selectivity obtained by chromatographic analysis of the treated product oil and the normal paraffin and aromatic compound contents of the heart-cut fraction are listed in Table 1.

(Example 5)

A bottom recycling experiment was conducted in the same manner as Example 1, except that the wax used (normal paraffin content: 76 % by mass) was a mixture of FT wax as the crude wax and a petroleum-based paraffin wax in a weight ratio of 60:40. The reaction temperature for hydrocracking of the crude wax and untreated wax fraction was 326°C. The heart-cut fraction selectivity obtained by chromatographic analysis of the treated product oil and the normal paraffin and aromatic compound contents of the heart-cut fraction are listed in Table 1.

(Example 6)

A bottom recycling experiment was conducted in the same manner as Example 1, except that the untreated wax was not mixed with the crude FT wax, and the position of connection of the reaction column line 1 with the line L4 was switched to a position at the side of the reaction column 1 at 3L/5 from the upstream end of the hydrocracking catalyst layer 2 (where L represents the distance from the upstream end to the downstream end of the hydrocracking catalyst layer 2). The reaction temperature for hydrocracking of the crude wax and untreated wax fraction was 292°C. The heart-cut fraction selectivity obtained by chromatographic analysis of the treated product oil and the normal paraffin and aromatic compound contents of the heart-cut fraction are listed in Table 1.

(Comparative Example 1)

A bottom recycling experiment was conducted in the same manner as Example 1, except that the conversion ratio represented by formula (1) above was 40 % by mass for the hydrocracking of crude wax alone, the conversion ratio represented by general formula (1) for hydrocracking of the crude wax and untreated wax fraction was 60 % by mass, and the untreated wax content of the mixture was 40 % by mass. The reaction temperature for hydrocracking of the mixture of the crude wax and untreated wax fraction was 274°C. The heart-cut fraction selectivity obtained by chromatographic analysis of the treated product oil and the normal paraffin and aromatic compound contents of the heart-cut fraction are listed in Table 1.

(Comparative Example 2)

Hydrocracking of wax was carried out in the same manner as Example 1, except that the conversion ratio represented by formula (1) above was 95 % by mass for the hydrocracking of crude wax alone, the conversion ratio represented by general formula (1) for hydrocracking of the crude wax and untreated wax fraction was 95 % by mass, and the untreated wax content of the mixture was 5 % by mass. The reaction temperature for hydrocracking of the mixture of the crude wax and untreated wax fraction was 312°C. The heart-cut fraction selectivity obtained by chromatographic analysis of the treated product oil and the normal paraffin and aromatic compound contents of the heart-cut fraction are listed in Table 1.

[Table 1]

|  | Heart-cut fraction selectivity (% by mass) | Normal paraffin content of heart-cut fraction (% by mass) | Aromatic compound content of heart-cut fraction (% by mass) |
|---|---|---|---|
| Example 1 | 82.4 | 19.6 | 0 |
| Example 2 | 80.5 | 13.8 | 0 |
| Example 3 | 81.4 | 13.5 | 0 |
| Example 4 | 82.5 | 19.1 | 0 |
| Example 5 | 80.1 | 13.1 | 0 |
| Example 6 | 83.0 | 19.4 | 0 |
| Comp. Ex. 1 | 82.5 | 41.6 | 0 |
| Comp. Ex. 2 | 56.8 | 12.9 | 0 |

As shown in Table 1, it was confirmed that Examples 1-6 had high heart-cut fraction selectivity and low normal paraffin contents in the heart-cut fraction, thus demonstrating that it is possible to simultaneously achieve increased heart-cut fraction yield and reduced normal paraffin content in the heart-cut fraction. Furthermore, no aromatic compounds were detected in the heart-cut fraction in Examples 1-6.

**Industrial Applicability**

The hydrocracking method of wax and fuel base manufacturing process of the invention can simultaneously achieve both an increased heart-cut fraction yield (as the target product of the hydrocracking) and a reduced normal paraffin content in the heart-cut fraction, when untreated wax is subjected to bottom recycling, and is thus useful for producing of environmentally-friendly, clean liquid fuel.

**Claims**

1. A hydrocracking process wherein crude wax is subjected to hydrocracking and the untreated wax fraction that is produced after the hydrocracking is re-supplied for hydrocracking, and wherein hydrocracking of the crude wax and untreated wax fraction is carried out in the presence of a hydrocracking catalyst in such a manner that the conversion ratio is 50-85 % by mass from the wax fraction with a boiling point of 360°C and above to the light fraction with a boiling point of below 360°C.

2. The hydrocracking method of wax according to claim 1, wherein the hydrocracking catalyst contains USY-zeolite and at least one solid acid selected from among silica-alumina, alumina-boria and silica-zirconia.

3. The hydrocracking method of wax according to claim 2, wherein the mean particle size of the USY-zeolite is no greater than 1.0 $\mu$m.

4. The hydrocracking method of wax according to claim 2 or 3, wherein the USY-zeolite content is no greater than 6 % by mass based on the total weight of the hydrocracking catalyst.

**5.** The hydrocracking method of wax according to any of claims 1 to 4, wherein the reaction temperature for hydrocracking of the crude wax and untreated wax fraction is no higher than 370°C.

**6.** A production method of a fuel base material,
the process comprising a hydrocracking step wherein crude wax is subjected to hydrocracking and the untreated wax fraction that is produced after the hydrocracking is re-supplied for hydrocracking, in which hydrocracking step hydrocracking of the crude wax and untreated wax fraction is curried out in the presence of a hydrocracking catalyst in such a manner that the conversion ratio is 50-85 % by mass from the wax fraction with a boiling point of 360°C or above to the light fraction with a boiling point of below 360°C.

# Fig.1

## INTERNATIONAL SEARCH REPORT

International application No.

PCT/JP2007/050658

| A. CLASSIFICATION OF SUBJECT MATTER |
|---|
| C10G65/10(2006.01)i, B01J29/12(2006.01)i, C10G47/18(2006.01)i, C10G47/20 (2006.01)i |

According to International Patent Classification (IPC) or to both national classification and IPC

| B. FIELDS SEARCHED |
|---|
| Minimum documentation searched (classification system followed by classification symbols) |
| C10G1/00-75/04, B01J21/00-38/74 |

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2004-536894 A (Shell Internationale Research Maatschappij B.V.), 09 December, 2004 (09.12.04), Claims; Par. Nos. [0005], [0006], [0009], [0027]; example 1 & WO 2002/070628 A2 & NO 200303902 A & KR 2003080077 A & US 2004/074810 A1 & EP 1412459 A2 & AU 2002256642 A & BR 200207894 A & MX 2003007983 A & US 6858127 B2 & NZ 527944 A & CN 1692152 A & ZA 200306842 A | 1-6 |
| Y | JP 2004-285155 A (Japan Energy Corp.), 14 October, 2004 (14.10.04), Claims; Par. No. [0015]; examples (Family: none) | 1-6 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 28 March, 2007 (28.03.07) | Date of mailing of the international search report 10 April, 2007 (10.04.07) |
|---|---|
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/050658 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-522382 A  (Exxon Research & Engineering Co.), 13 November, 2001 (13.11.01), Page 7, lines 6 to 28; page 10, lines 7 to 10 & WO 1998/034998 A1      & ZA 9800621 A & US 5814109 A          & NO 9903739 A & EP 958334 A1           & BR 9807171 A | 1-6 |
| Y | US 2004-0092384 A1  (Hye Kyung C.Timken et al.), 13 May, 2004 (13.05.04), Abstract; Par. Nos. [0021], [0032], [0033]; examples & JP 2006-505676 A      & EP 1558704 A1 & WO 2004/044100 A1     & WO 2004/044099 A1 & US 6860986 B2         & CN 1723264 A & AU 2003291747 A       & AU 2003279921 A & ZA 200503604 A | 2-5 |
| A | WO 2004/028688 A1  (Nippon Oil Corp.), 08 April, 2004 (08.04.04), Claims; page 3, line 5 to page 5, line 7; examples 1 to 5 & AU 2003266527 A        & EP 1547683 A1 & US 2005/0145541 A1     & JP 2004-539467 A | 2-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004255241 A

- JP 2004255242 A